# EUROPÄISCHE PATENTSCHRIFT

(11) **EP 1 339 570 B1**
(45) Veröffentlichungstag und Bekanntmachung des Hinweises auf die Patenterteilung: **16.02.2005**
(21) Anmeldenummer: 01995579.8
(22) Anmeldetag: 06.12.2001
(51) Int. Cl.: B60R 21/01

(54) **VORRICHTUNG UND VERFAHREN ZUM ERFASSEN EINES OBJEKTS IN EINEM FAHRZEUG**
DEVICE AND METHOD FOR DETECTING AN OBJECT IN A VEHICLE
DISPOSITIF ET PROCEDE DE DETECTION D'UN OBJET DANS UN VEHICULE

(30) Priorität: 07.12.2000 DE 10060914
(43) Veröffentlichungstag der Anmeldung: 03.09.2003
(73) Patentinhaber: SIEMENS AKTIENGESELLSCHAFT, 80333 München (DE)
(72) Erfinder: KÖHLER, Thorsten, 93180 Deuerling (DE); ERTL, Ludwig, 93057 Regensburg (DE); VOLTZ, Stephan, 91230 Happurg (DE)
(86) Internationale Anmeldenummer: PCT/DE2001/004584
(87) Internationale Veröffentlichungsnummer: WO 2002/046003

(56) Entgegenhaltungen:
- DE-A- 19 749 855
- DE-A- 19 852 653
- DE-A- 19 947 062
- US-A- 6 049 747

## Beschreibung

Die Erfindung betrifft eine Vorrichtung und Verfahren zum Erfassen eines Objekts in einem Fahrzeug, insbesondere zur Insassenerkennung, und die Verwendung der Vorrichtung und des Verfahrens zum Einstellen eines Elements.

Verfahren und Vorrichtungen gemäß dem Oberbegrift von Anspruch 23 bzw.1 sind im Stand der Technick allgemein bekannt.

Aus "4th International Symposium and Exhibition on Sophisticated Car Occupant Safety Systems" vom Fraunhofer Institut Chemische Technologie ist ein System zur Insassenerkennung bekannt, bei dem mit Hilfe von infrarotoptischer Technologie die Belegung eines Fahrzeugsitzes erkannt wird. Dabei werden von einer LED-Zeile über eine Optik Lichtflecke auf den zu erkennenden Sitzbereich projiziert. Jeder dieser Lichtflecke wird wiederum mittels einer Empfängerlinse auf eine CCD-Zeile abgebildet. Je nach Entfernung des Leuchtflecks ergibt sich eine unterschiedliche Lage der Peaks auf der CCD-Zeile. Mit Hilfe eines Triangulationsverfahrens wird aus der festen Geometrie des Bildsensors und der Lage des Maximums die Entfernung bestimmt, so dass auf diese Weise mit mehreren LEDs die Stützpunkte einer Kontur ermittelt werden.

Nachteilig an einem solchen System ist, dass die Form eines Objekts auf dem Fahrersitz, beispielsweise eines Insassen oder eines Kindersitzes, nur mit geringer Auflösung durchführbar ist.

Aufgabe der Erfindung ist es, eine Positionserfassung von Elementen oder Objekten in einem Fahrzeug durchzuführen.

Die Aufgabe der Erfindung wird durch die Merkmale der unabhängigen Patentansprüche gelöst.

An Elementen des Fahrzeugs, beispielsweise an einem Fahrzeugsitz, ist eine optische Markierung angebracht. In dem Fahrzeug ist eine Kamera angebracht, die die Markierung(en) erfasst. Eine Auswerteinheit ist der Kamera nachgeschaltet und ermittelt die Position der Markierungen.

Die Kamera nimmt räumliche Information des zu erfassenden Bildbereichs auf, wobei die Kamera als Stereokamera (3D-Kamera) mit zwei Bildsensoren ausgebildet sein kann, deren optische Achsen einen vorgegebenen Abstand voneinander aufweisen.

Eine geeignete Kamera ist beispielsweise eine 3D-Kamera, die mittels eines Abstandsbildes die Kontur des Objekts auf einem Fahrzeugsitz liefert. Aus der Kontur des Objekts kann durch Subtraktion der Kontur der Sitzoberfläche die Volumenverteilung des Objekts auf dem Sitz abgesetzt werden. Dies stellt ein sehr robustes Verfahren für die Klassifikation des Objekts in Kindersitze und Personen unterschiedlicher Gewichtsklassen dar. Für ein solches Verfahren ist es wichtig, die Oberfläche (Kontur) des unbelegten Fahrzeugsitzes zu messen und zu speichern, so dass die Information dann im belegten Zustand für die Ermittlung des Abstandsbildes des Fahrzeugsitzes zur Verfügung steht. Die Sitze werden aber meist nach Belegung durch eine Person verstellt. Aus der Position der Markierungen beispielsweise am Fahrzeugsitz kann die Auswerteinheit aufgrund der vorgegebenen Abmessungen der betreffenden Elemente im Fahrzeug die Oberflächenform des unbelegten Elements errechnen, beispielsweise die Kontur der Oberfläche des Fahrzeugsitzes. Vorteilhaft ist dadurch die Oberflächenform des Fahrzeugsitzes bekannt, wodurch vorteilhaft die mit Hilfe von Bildverarbeitungsalgorithmen durchgeführte Erfassung eines Insassen- oder eines Kindersitzes einfacher und sicherer wird.

Als weiteres Element ist ein Kindersitz, eine Kopfstütze oder ein Rückspiegel denkbar.

Weiterhin kann die Auswerteinheit aus der Position der Markierungen die Position des Elements ermitteln. Das Element kann bezüglich dem Fahrzeug bewegbar oder fixiert sein.

Die Markierungen können jeweils eine vorgegebene geometrische Form aufweisen, beispielsweise eine punktförmige, linienförmige und/oder flächige Form. So kann eine Markierung beispielsweise eine charakteristische Gestalt aufweisen und beispielsweise aus einer Gruppe von punktförmigen, linienförmigen oder flächigen Markierungen bestehen.

Eine Markierung kann als Reflektor ausgebildet sein, beispielsweise ein flacher Spiegel, als Tripelspiegel, der das aufgenommene Licht genau um 180° bezüglich der Lichtquelle reflektiert, oder als Kugel-Spiegel ausgebildet sein, der das Licht einer Lichtquelle entsprechend dessen Krümmung in einem vorgegebenen Raumwinkel verteilt. Auch ist ein Diffus-Reflektor mit hohem Reflexionsfaktor denkbar.

In einer weiteren Ausführungsform ist mindestens eine der Markierungen als Lichtsender ausgebildet, dessen Licht direkt auf die Kamera trifft. Der Lichtsender kann Licht mit einer vorgegebenen Signalsequenz aussenden, wodurch jeder der als Lichtsender ausgebildeten Markierungen individuell codiert werden kann.

Die Kamera ist vorzugsweise am Himmel des Fahrzeugdachs angeordnet. Der Helligkeitswert des von der Markierung reflektierten oder ausgesandten Lichtes ist größer als der Helligkeitswert des von dem Element in der unmittelbaren Umgebung der Markierung reflektierten Lichtes. Dadurch kann die Kamera durch Grauwertbildung und mit Hilfe von Bildauswertungsverfahren, die in der an die Kamera angeschlossenen Auswerteinheit ablaufen, die entsprechende Markierung eindeutig erfassen und deren räumliche Position ermitteln. Bei Abdecken der Markierung trifft kein Licht von der Markierung auf die Kamera, was zusätzlich ausgewertet werden kann und beispielsweise Hinweise auf eine Sitzbelegung, einen Kindersitz auf dem Sitz oder einen Sitzbezug liefern kann.

Vorzugsweise ist das von der entsprechenden Markierung reflektierte oder ausgesandte Licht um mindestens um das Doppelte heller als das von den Elementen reflektierte Licht.

Mit Hilfe der oben genannten Vorrichtung bzw. des oben genannten Verfahrens können beispielsweise die Position eines Rückspiegels, eines Fahrzeugsitzes, eines Kindersitzes erkannt werden. Durch das Erkennen der Position der Markierungen werden Bildverarbeitungsverfahren zur Insassenerkennung unterstützt werden, da damit die genaue Position des Fahrzeugsitzes, des Kindersitzes o. ä. bekannt ist. Weiterhin können entsprechende Bildverarbeitungssysteme nun sicher die Position eines Fahrzeuginsassen feststellen und beispielsweise den Fahrzeugsitz von dem Körper des Insassen unterscheiden. Es ist somit eine Klassifikation des Belegungszustandes des Fahrzeugsitzes möglich, wodurch ein Airbag oder ein Gurtrückhaltesystem entsprechend der Art der Sitzbelegung ganz, teilweise oder gar nicht auslöst.

Weiterhin können die Position des Rückspiegels, der Kopfstütze in Abhängigkeit der ermittelten Position des Insassen, insbesondere dessen Kopfposition, eingestellt werden.

Durch die Extrapolation (Verlängerung) der Rücklehne auf dem Fahrzeugboden sind auch die Verschiebung und die Position des Gesamtsitzes bezüglich des Fahrzeugbodens feststellbar.

Um die optisch sichtbaren Markierungen von Lichtreflexen unterscheiden zu können sind die Markierungen entweder räumlich, d. h. durch ein Muster und/ zeitlich, d. h. durch ein charakteristisches mit der Bildrate korrelierten Signal codiert werden. (n. o.)

Die Kamera liefert neben dem Entfernungsbild auch ein Grauwertbild des zu erfassenden Bildbereichs im Fahrzeug. Über ein Berechnungsverfahren (Algorithmus) zur Ermittlung eines Entfernungsbilds wird dabei jeweils einer Position (x, y) eines jeweiligen Bildsensors mit dem der Position zugeordneten Grauwertbild eine (x, y, z) Position im Entfernungsbild mit einem Grauwertbild zugeordnet. Eine Position im Grauwertbild kann damit einen Punkt der Kontur eines Elements im Fahrzeuginnenraum oder einer Markierung zugeordnet werden.

Bewegbare Markierungen können weiterhin zu unbewegbaren Markierungen in Relation gesetzt werden, wodurch die Positionen der bewegbaren Markierungen schneller und sicherer erfassbar sind. Bewegbare Elemente sind beispielsweise ein verschiebbarer Fahrzeugsitz mit Kopfstütze und Kindersitz oder ein Rückspiegel. Unbewegbare Elemente im Fahrzeug sind beispielsweise ein Armaturenbrett, die Windschutzscheibe oder die Türverkleidung.

Eine Verdeckung von Airbags, z. B. Frontairbags und Seitenairbags kann durch eine zeitlich anhaltende Verdeckung der optischen Markierungen detektiert werden. Eine entsprechende Warnung, dass ein Airbag beispielsweise durch eine Tasche oder ein Sitzbezug verdeckt ist, kann an den Fahrer ausgegeben werden. Somit kann bei anhaltender Verdeckung von für die Sicherheit des Insassen wichtigen Markierungen eine optische oder akustische Warnung an den Fahrer ausgeben werden.

Vorteilhaft wird durch Anbringen von Markierungen an einem Fahrzeugsitz vermieden, sicherheitsrelevante Funktion im Fahrzeugsitz selbst anzuorden, beispielsweise Positionssensoren zum Feststellen der Position des Fahrzeugsitzes, was zu einer Vereinfachung des Sicherheitskonzepts führt. Eine bisher nicht erreichte einfache und sichere Messung der Position der Sitzlehne auf Neigung und Position wird ebenfalls ohne Einsatz von zusätzlichen Sensoren ermöglicht.

Die Positionsermittlung eines Fahrzeugsitzes kann weiterhin als Positionsgeber für ein personenbezogenes Sitzspeichersystem eingesetzt werden. Dadurch kann auf einen Positionsgeber, ein externes Memory oder einen externen Controller verzichtet werden. Mit optischen Markierungen auf der Sitzfläche und der Fläche der Sitzlehne kann zur Erhöhung der Sicherheit verifiziert werden, ob der Sitz leer oder belegt ist. Bei kurzzeitiger, oder teilweiser Verdeckung der Markierungen ist mit Hilfe der Ausbildung der Markierung als zeitlich codierte Lichtsender die Robustheit des Bilderkennungsverfahrens vorteilhaft zu erhöhen.

Weiterhin können Markierungen am Gurt angeordnet sein, um die ausgerollte Gurtlänge zu ermitteln oder zu erkennen, ob der Gurt angelegt ist.

Bei elektrischen Fensterhebern besteht die Gefahr, beim Schließen einen Gegenstand, z.B. den Kopf, den Hals, oder Teile des Arms eines Insassen einzuklemmen. Es kann durch ein Bilderfassungsverfahren die obere Kante der Fensterscheibe in der Fahrzeugtür detektiert werden. Durch Anbringen einer Markierung in der Fensterscheibe, an der Innenseite der Fensterscheibe, an deren oberen Kante oder im deren unteren Bereich kann die Position bzw. die aktuelle Höhe der Fensterscheibe festgestellt werden. Durch die o.g. Bilderfassungsverfahren ist ein Gegenstand zwischen der oberen Kante der Fensterscheibe und dem oberen Teil des Fensterrahmens feststellbar. Weiterhin kann durch Feststellen einer Unterbrechung zwischen einer Markierung bzw. eines Teils einer Markierung bei flächig ausgebildeten Markierungen auf einen Gegenstand im Bereich der Oberkante der Fensterscheiben (Gefahrenbereich) geschlossen werden. Eine Markierung kann in das Glas der Fensterscheibe integriert. Das automatische Schließen des Fensters mit Hilfe eines Elektromotors wird in Abhängigkeit der detektierten Position des Gegenstands und der Position der Fensterhöhe gesteuert, wodurch vorzugsweise ein Einklemmen des Gegenstands durch Stoppen oder Verlangsamen des Schließens verhindert wird.

Bevorzugte Ausführungsformen und Weiterbildungen der Erfindung sind in den abhängigen Ansprüchen angegeben.

Die Erfindung wird anhand von Zeichnungen näher erläutert. Es zeigen:
- Figur 1: die Seitenansicht eines Systems zum Erfassen von Objekten in einem Fahrzeug;
- Figur 2: die Aufsicht auf ein System gemäß Figur 1;
- Figur 3a, 3b: die Seitenansicht eines Fahrzeugsitzes mit verschiedenen Markierungen,
- Figur 4: eine Signalsequenz von einer als Lichtsender ausgebildeten Markierung über die Zeit;
- Figur 5: ein Fahrzeugsitz mit seitlich an dessen Lehne angebrachten Markierungen.

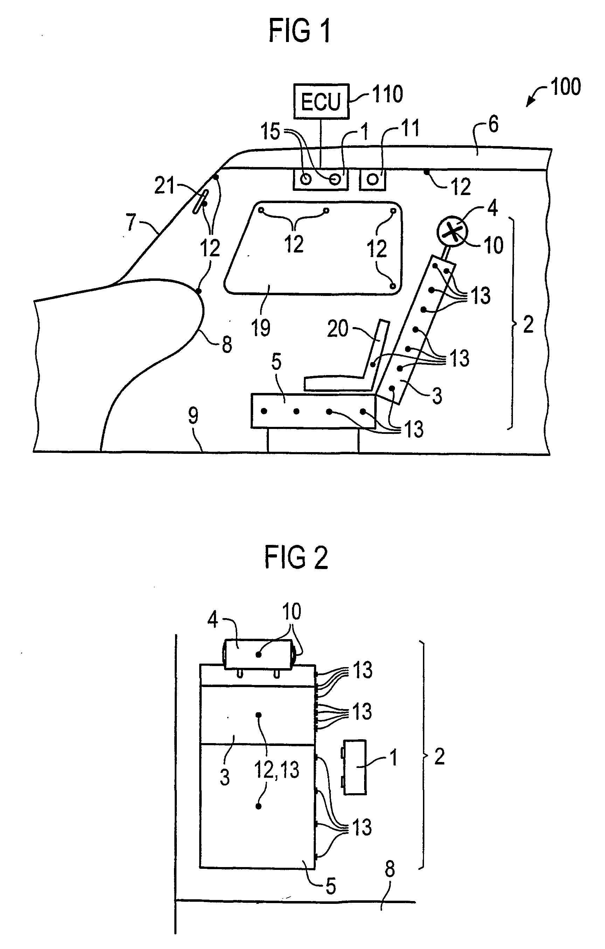

Im Folgenden sind Elemente mit gleicher Funktion in den Figuren 1 bis 5 mit gleichen Bezugszeichen versehen.

In Figur 1 ist ein Teil des Innenraums eines Fahrzeugs 100 schematisch dargestellt. Das Fahrzeug 100 weist einen Fahrzeugboden 9 auf, auf dem ein Fahrzeugsitz 2 befestigt ist. Vor dem Fahrzeugsitz 2 in Fahrtrichtung ist ein Armaturenbrett 8 angeordnet, über dem sich eine Windschutzscheibe 7 bis zum Dach 6 des Fahrzeugs 100 erstreckt. Im Himmel des Dachs 6 ist eine Kamera 1 befestigt, die einen Teil des Innenraums des Fahrzeugs erfasst, im Folgenden als Bildbereich definiert. Eine Lichtquelle 11 beleuchtet den zu erfassenden Bildbereich. Der Bildbereich besteht in diesem Fall aus dem Bereich, der sich im Wesentlichen aus dem Armaturenbrett 8, dem Fahrzeugboden 9, dem Fahrzeugsitz 2 und der Fahrzeugtür zusammensetzt. In einer weiteren Ausführungsform sind mehrere Kameras 1 zur Erfassung von mehreren Bildbereichen im Fahrzeuginneren vorhanden, beispielsweise zur Erfassung des Bereichs des Fahrersitzes und des Beifahrersitzes 2. Dabei kann die Lichtquelle 11 beide Fahrzeugbereiche gleichzeitig oder getrennt beleuchten. Eine Auswerteinheit 110 ist der Kamera 1 nachgeschaltet und wertet die von der Kamera 1 erfassten Bilder aus.

Der Fahrzeugsitz weist eine Sitzfläche 5 auf, auf dem ein Kindersitz 20 oder ein Insasse (nicht dargestellt) aufliegt bzw. sitzt. Eine Sitzlehne 3 erstreckt sich vom hinteren Teil der Sitzfläche 13 in Richtung des Fahrzeugsdachs 6. Am oberen Teil der Sitzlehne 3 ist eine Kopfstütze 4 angeordnet. Der Fahrzeugsitz 2 ist per Hand oder mit Hilfe von eingebauten Elektromotoren in Richtung Fahrtrichtung verstellbar. Ebenfalls ist der Neigungswinkel der Sitzlehne 3 manuell oder automatisch verstellbar. Die Kopfstütze 4 ist ebenfalls manuell oder automatisch in ihrer Höhe verstellbar. Ein Rückspiegel ist im vorderen Frontbereich angeordnet und ist manuell oder automatisch verstellbar. Der Rückspiegel 21 steht beispielhaft für einen Innen-Rückspiegel oder einen Außen-Rückspiegel.

Optische Markierungen 12 sind am Armaturenbrett 8, am Rückspiegel 21, am Übergang zwischen dem Dach 6 und der Windschutzscheibe 7, am Himmel des Fahrzeugdachs 6 in der Nähe der Kopfstütze 4 und an der verstellbaren Fensterscheibe 19 angebracht. Weitere optische Markierungen 13 sind seitlich an der Sitzlehne 3, der Kopfstütze 4, der Sitzfläche 5 und dem Kindersitz 20 angebracht.

Die Position der Markierungen 10, 13 am Fahrzeugsitz sind in Figur 2 präzisiert. In Figur 2 ist der Innenraum des Fahrzeugs 100 gemäß Figur 1 mit einer Ansicht von oben dargestellt. Die Kamera 1 ist hier am Himmel des Fahrzeugdachs 6 zwischen dem Beifahrersitz und dem nicht dargestellten Fahrersitz angeordnet. Markierungen 13 sind seitlich an der Seitenfläche der Sitzlehne 3 und der Sitzfläche 5 angeordnet.

Weitere Markierungen 12, 13 sind auf der Sitzfläche 5 und der Lehnfläche der Lehne 3 angeordnet. Weitere Markierungen sind seitlich an der Seitenfläche der Kopfstütze 4 und an dessen potentiellen Kontaktfläche mit dem Kopf des Insassen angeordnet. Die Markierungen 10, 12, 13 können in weiteren Ausführungsformen als Reflektoren 12, 13 und/oder als Lichtsender 13 ausgebildet sein. Die Kamera 1 ist als 3D-Kamera ausgebildet, die ein Entfernungsbild und ein Grauwertbild des zu erfassenden Bildbereichs an die nachgeschaltete Auswerteinheit 110 (Figur 1) zum weiteren Auswerten liefert. Die Kamera 1 liefert mittels eines Abstandsbildes die Kontur des Objektes auf dem Fahrzeugsitz 2. Aus der Kontur des Objekts kann durch Subtraktion der Kontur der Sitzoberfläche die Volumenverteilung des Objekts auf dem Sitz ermittelt werden. Dadurch kann das Objekt klassifiziert werden, beispielsweise in Kindersitz und Personen unterschiedlicher Gewichtsklassen. Die Auswerteinheit 110 ermittelt mit Hilfe von Bildverarbeitungsalgorithmen das entsprechende Abstandsbild.

Das Bilderfassungssystem gemäß der Figuren 1 und 2 funktioniert folgendermaßen:

Die Lichtquelle 11 beleuchtet den zu erfassenden Bildbereich. Die Kamera 1 erfasst die vom zu erfassenden Bildbereich reflektierten Lichtstrahlen und speichert pixelweise die Grauwertinformation des erfassten Bildes und überträgt diese an die Auswerteinheit 110. Die als Reflektoren ausgebildeten Markierungen 10, 13 reflektieren das von der Lichtquelle 11 ausgesandte Licht besonders gut, so dass die Markierungen 13, 12 als im Vergleich zum restlichen Bild helle Lichtpunkte, Lichtlinien oder Lichtflächen von der Kamera erfasst werden. Die Auswerteinheit 110 erkennt nun an den Bildinformationen mit sehr hellen Grauwerten, dass dort eine Markierung 12, 13 vorhanden ist. Mit Hilfe von Bildauswertealgorithmen und der 3D-Kamera 1 wird die räumliche Position der Markierungen 12, 13 ermittelt. Im Vergleich zur unmittelbaren Umgebung einer Markierung 12, 13 hebt sich diese durch eine besondere Helligkeit ab und ist so leicht detektierbar. Die vorgegebenen Abmessungen des Fahrzeugsitzes 2 und der Kopfstütze 4 ermöglichen es der Auswerteeinheit 110, deren Oberflächenform aus der Position der Markierungen 10, 12, 13 zu ermitteln. Aufgrund der nun bekannten Oberflächeninformation ist eine sichere Erkennung der auf den Fahrzeugsitz befindende Objekte, beispielsweise ein Insasse oder ein Kindersitz 20 realisierbar. Weist der Kindersitz 20 zusätzlich Markierungen auf, so ist auch die Position des Kindersitzes durch die festgestellte Position der Markierung 13 an der Seite des Kindersitzes 20 einfach und sicher ermittelbar.

Vorzugsweise wird die sichere Erkennung der Art von Objekten auf dem Fahrzeugsitz 2 durch die Markierungen 12, 13 auf der Sitzfläche 5 und auf der Lehnfläche der Fahrzeuglehne des Fahrzeugsitzes 2 unterstützt. Dadurch ist erkennbar, ob ein Kindersitz 20, ein Insasse oder beispielsweise ein Bezug oder eine Matte auf dem Fahrzeugsitz 2 angeordnet ist.

An der Seite der Kopfstütze 4 ist eine weitere Markierung 10 angebracht, die beispielhaft als Lichtsender ausgebildet ist. Das Licht dieses Lichtsenders 10 trifft auf die Kamera 1, die den großen Helligkeitsunterschied zwischen dem Lichtsender 13 und der unmittelbaren Umgebung des Lichtsenders 13 erfasst. Die Ermittlung der Position des Lichtsenders 13 geschieht wie oben beschrieben. Aufgrund der bevorzugten Position der Kamera zwischen den beiden Vordersitzen (1) sind die Markierungen 13, 10 an der seitlichen Sitzfläche angeordnet, so dass eine direkte Sichtverbindung zwischen der Kamera 1 und der Markierungen 12, 13 besteht. Die Unterbrechung der Sichtverbindung zwischen der Kamera 1 und einer der Markierungen 12, 13 wird von der Kamera 1 erfasst und von der Auswerteinheit 110 ausgewertet.

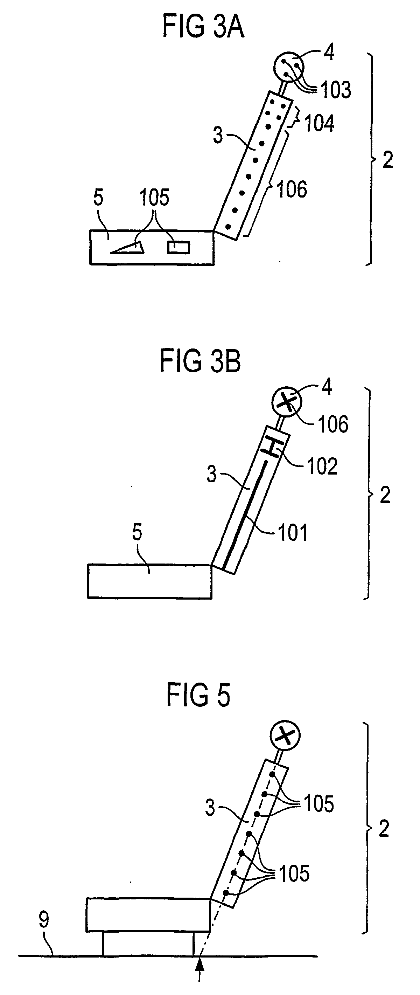

In Figur 3 sind verschiedene Ausführungsformen der am Fahrzeugsitz 2 angebrachten Markierungen aus Figur 1 und 2 dargestellt.

In Figur 3a sind an der Seite der Lehne 3 des Fahrzeugsitzes 2 Markierungen 104,106, beispielsweise als Reflektoren oder Lichtsender ausgebildet, in vorgegebenen geometrischen Formen angeordnet. Beispielsweise weist die Kopfstütze 4 drei punktförmige Markierungen 103 auf, deren Eckpunkte im wesentlichen die Form eines gleichschenkligen Dreiecks bilden. Der obere Teil der Lehne weist an dessen Seite punktförmige Markierungen 104 auf, die die Ecken eines Quadrats bilden. Weiterhin weist die Lehne 3 eine Gruppe von sieben punktförmigen Markierungen auf, die auf einer Linie angeordnet sind. An der Seite der Sitzfläche 5 sind flächige Markierungen 105 angeordnet, die beispielsweise aus einer Reflektionsfolie oder einer Elektrolumineszenzfolie bestehen. Die beiden dargestellten Markierungen 105 sind dreieckig bzw. rechteckig geformt.

In Figur 3b sind weitere Markierungen 101, 102, 106 an der Seite der Lehne 3 und der Kopfstütze 4 angeordnet. Die reflektierende Markierung 101 ist im Wesentlichen linienförmig ausgebildet. Die Markierung 102 an der Seite der Lehne 3 weist die Form des Buchstaben "H" auf. Die Markierung 106 an der Seite der Kopfstütze 4 weist die Form eines großen "X" auf.

Die verschiedenen vorgegebenen Formen, die in den Figuren 3a und 3b beispielhaft dargestellt sind, werden von der Kamera erfasst und von der Auswerteinheit 110 ausgewertet. Die Bilderkennungsoftware in der Auswerteinheit erkennt aus den Helligkeitsinformationen und der Form der jeweiligen Markierung deren Position. Dadurch ist Positionserkennung sicher durchführbar. Jeder geometrischen Form ist eine vorgegebene Position an dem Fahrzeugsitz 2 zugeordnet. In weiteren Ausführungsformen sind beliebige geometrische Muster und Formen denkbar.

Die Markierungen, die als Reflektoren ausgebildet sind, reflektieren das Licht in verschiedener Weise: Bei Tripel-Reflektoren wird das von der Lichtquelle 11 ausgestrahlte Licht im Wesentlichen um 180 Grad reflektiert und zur Lichtquelle 11 und der in deren Nähe angeordneten Kamera 1 zurückgeschickt. Dabei sind Lichtquelle 11 und Kamera 1 nah beieinander angeordnet, vorzugsweise in einem Gehäuse. In einer weiteren Ausführungsform sind die Reflektoren so ausgebildet, dass das vom Umgebungslicht oder von der Lichtquelle 11 ankommende Licht in verschiedene Richtungen reflektiert wird, beispielsweise gestreut wird.

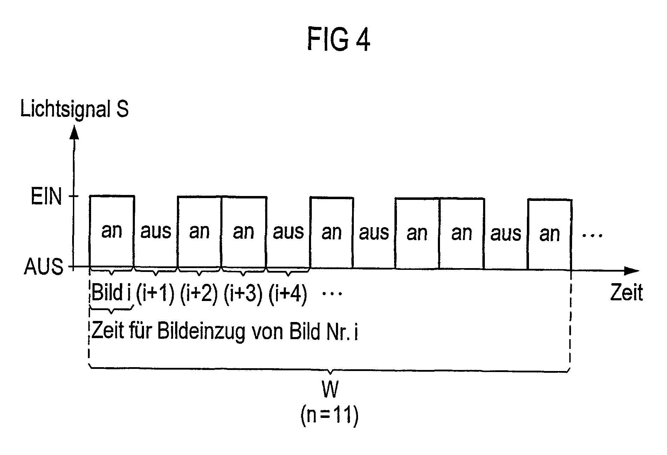

Bei Ausbildung der Markierungen als Lichtsender 13, der beispielsweise als LED- oder Laserdiode ausgebildet ist, besteht zusätzlich die Möglichkeit, die Position der Markierungen nicht nur geometrisch zu codieren, sondern auch durch Aussenden einer vorgegebenen, einen jeden Lichtsender 13 charakterisierenden Lichtsequenz. Eine solche Lichtsequenz ist in Figur 4 dargestellt.

Die Lichtsignale S des Lichtsenders 13 werden in einer vorgegebenen Folge an- und ausgeschaltet. Dabei ist die Zeitdauer des An- bzw. Ausschaltens des Lichtsenders 13 synchronisiert mit der Bilderfassungszeit zum Bildeinzug eines Bildes mit der Kamera 1.

In der Figur 4 wird während der Zeit i ein Bild i erfasst (Bildeinzug des Bildes Nr. i). Der Lichtsender 13 ist bevorzugt während der Zeit i eingeschaltet, und kann in einer weiteren Ausführungsform auch nur teilzeitig eingeschaltet sein. In der folgenden Zeit i+1 zur Erfassung des Bildes i+1 ist der Lichtsender 13 ausgeschaltet. Die weitere Signalsequenz S des Lichtsenders 13 während der Zeiten i+2, i+3, ... sind:
An-An-Aus-An-Aus-An-An-Aus-An

Durch Zusammenfassung von n-Bildern der Zeitdauer i, hier ist n = 11, wird ein Wort W der Länge 11 gebildet. Dieses Wort W ist durch die Auswerteinheit 110 anhand der zu unterschiedlichen Erfassungszeiten i+x unterschiedlichen Helligkeitsinformationen des Lichtsender 13 erkennbar, wodurch der entsprechende Lichtsender 13 anhand der Grauwertinformationen eindeutig codiert ist und von der Auswerteeinheit 110 erkannt wird. Jedem Lichtsender 13 kann somit eine eindeutige Signatur zugeordnet werden.

In Figur 5 ist ein Fahrzeugsitz 2 dargestellt, an dessen Lehne 3 punktförmige Markierungen 105 in einer geraden Linie angeordnet sind. Durch Auswerten der Position der Markierungen der Linie und dessen Schnittpunkt mit dem Fahrzeugboden ist die Position des Fahrzeugsitzes 2 bezüglich dem Fahrzeugboden 9 eindeutig zuweisbar. Somit erübrigen sich vorteilhaft aufwendige mechanische Messverfahren zur Feststellung der Position des Fahrzeugsitzes.

## Patentansprüche

1. Vorrichtung zum Erfassen eines Objekts in einem Fahrzeug (100), insbesondere zur Insassenerkennung, mit
- mindestens einer optischen Markierung (12,13,10,101,102,103,104), die an mindestens einem am oder im Fahrzeug (100) angeordneten Element (3,5,6,7,8,20,21) angebracht ist,
- einer die Markierungen (12,13,10,101,102,103,104) erfassende Kamera (1), die in dem Fahrzeug (100) ange-. ordnet ist,
- einer die Position der Markierungen (12,13,10,101,102,103,104) ermittelnde Auswerteein-heit (110), die der Kamera (1) nachgeschaltet ist, **dadurch gekennzeichnet, daß**
- die Auswerteinheit (110) aus der Position der wenigstens einen Markierung und der vorgegebenen Abmessung des Elements (3,5,6,7,8,20,21) die Oberflächenform des Elements ermittelt.

2. Vorrichtung nach einem der vorhergehenden Ansprüche, **dadurch gekennzeichnet, dass**
die Kamera (1) räumliche Informationen des zu erfassenden Bildbereichs erfasst und vorzugsweise als Stereokamera mit zwei Bildsensoren (15) ausgebildet ist, deren optische Achsen einen vorgegebenen Abstand voneinander aufweisen.

3. Vorrichtung nach einem der vorhergehenden Ansprüche, **dadurch gekennzeichnet, dass**
die Auswerteinheit (110) aus der Position der Markierungen (12,13,10,101,102,103,104) die Position eines Elements (3,5,6,7,8) im Fahrzeuginneren ermittelt.

4. Vorrichtung nach einem der vorhergehenden Ansprüche, **dadurch gekennzeichnet, dass**
das Element (3,5,6,7,8,20,21) bezüglich dem Fahrzeug (100) bewegbar ist.

5. Vorrichtung nach einem der vorhergehenden Ansprüche, **dadurch gekennzeichnet, dass**
das Element (3,5,6,7,8,20,21) bezüglich dem Fahrzeug (100) fixiert ist.

6. Vorrichtung nach einem der vorhergehenden Ansprüche, **dadurch gekennzeichnet, dass**
das Element (3,5,6,7,8) als Armaturenbrett (8) und/oder als Fenster (7) und/oder als Dachhimmel des Fahrzeugdachs (6) und/oder als Fahrzeugboden (9) und/oder als Fahrzeugsitz (2) und/oder als Lehne (3) des Fahrzeugsitzes (2) und/oder als Sitzfläche (5) des Fahrzeugsitzes (2) und/oder als Kindersitz (20) und/oder als Kopfstütze (4) und/oder als Innen-Rückspiegel (21) und/oder als Außen-Rückspiegel und/oder als Gurt und/oder als Fensterscheibe (19) ausgebildet sind.

7. Vorrichtung nach einem der vorhergehenden Ansprüche, **dadurch gekennzeichnet, dass**
die Markierung bzw. die Markierungen (12,13,10,101,102,103,104) an einer Seite des jeweiligen Elements angeordnet sind, vorzugsweise an der der Kamera (1) zugewandten Seite.

8. Vorrichtung nach einem der vorhergehenden Ansprüche, **dadurch gekennzeichnet, dass**
die Auswerteinheit (110) aus der Position der Markierung bzw. der Markierungen (12,13,10,101,102,103,104) am Fahrzeugsitz (2) die Kontur der Oberfläche des Fahrzeugsitzes (2) ermittelt.

9. Vorrichtung nach einem der vorhergehenden Ansprüche, **dadurch gekennzeichnet, dass**
zumindest eine der Markierungen (12,13,10,101,102,103,104) eine vorgegebene geometrische Form aufweist.

10. Vorrichtung nach einem der vorhergehenden Ansprüche, **dadurch gekennzeichnet, dass**
zumindest eine der Markierungen (12,13,10,101,102,103,104) punktförmig (13) und/oder linienförmig (101) und/oder flächig ausgebildet ist.

11. Vorrichtung nach einem der vorhergehenden Ansprüche, **dadurch gekennzeichnet, dass**
zumindest eine der Markierungen (12,13,10,101,102,103,104) eine charakteristische Gestalt aufweist, vorzugsweise als eine Gruppe von punktförmigen (104) und/oder linienförmigen (101, 102) und/oder flächigen (105) Markierungen.

12. Vorrichtung nach einem der vorhergehenden Ansprüche, **dadurch gekennzeichnet, dass**
zumindest eine der Markierungen (12,13,10,101,102,103,104) als Reflektor (10) ausgebildet ist, der beispielsweise als Flach-Spiegel, als Tripel-Spiegel oder als Kugel-Spiegel ausgebildet ist.

13. Vorrichtung nach einem der vorhergehenden Ansprüche, **dadurch gekennzeichnet, dass**
zumindest eine der Markierungen (12,13,10,101,102,103,104) als Lichtsender (13) ausgebildet ist, vorzugsweise als Elektrolumineszenzfolie, LED, Gasentladungslampe oder als Laserdiode.

14. Vorrichtung nach Anspruch 13, **dadurch gekennzeichnet, dass**
ein Lichtsender (13) durch Aussenden einer vorgegebenen Signalsequenz codiert ist.

15. Vorrichtung nach Anspruch 14, **dadurch gekennzeichnet, dass**
die Signalsequenz des Lichtsenders (13) aus digitalen Signalen (an, aus) besteht, die mit der Bilderfassungsrate (Bild i, Bild (i+1)) der Kamera (1) synchronisiert sind.

16. Vorrichtung nach einem der vorhergehenden Ansprüche, **dadurch gekennzeichnet, dass**
die Kamera (1) am Himmel des Fahrzeugdachs (6), vorzugsweise zentral zwischen den Fahrzeugsitzen, angeordnet ist.

17. Vorrichtung nach einem der vorhergehenden Ansprüche, **dadurch gekennzeichnet, dass**
eine Lichtquelle (11) den von der Kamera (1) zu erfassenden Bildbereich beleuchtet.

18. Vorrichtung nach einem der vorhergehenden Ansprüche, **dadurch gekennzeichnet, dass**
die Lichtquelle (11) in die Kamera (1) integriert ist.

19. Vorrichtung nach einem der vorhergehenden Ansprüche, **dadurch gekennzeichnet, dass**
- Markierungen (12,13,10,101,102,103,104) auf der Sitzfläche (5) und auf der Fläche der Sitzlehne (3) angeordnet sind,
- die Markierungen von der Kamera (1) erfasst werden, und
- die Auswerteinheit (110) den Belegungszustand des Fahrzeugsitzes(2) abhängig von der Verdeckung der Markierungen (12,13,10,101,102,103,104) ermittelt.

20. Vorrichtung nach Anspruch 19, **dadurch gekennzeichnet, dass**
die Auswerteinheit (110) die Belegung des Fahrzeugsitzes mit einem Kindersitz und dessen Position auf dem Fahrzeugsitz abhängig von den erkannten Markierungen am Kindersitz erkennt.

21. Vorrichtung nach. einem der vorhergehenden Ansprüche, **dadurch gekennzeichnet, dass**
die Auswerteinheit (110) die räumliche Position der Elemente (3,5,6,7,8,20,21) ermittelt.

22. Vorrichtung nach einem der vorhergehenden Ansprüche, **dadurch gekennzeichnet, dass**
die Kamera (1) Grauwerte des zu erfassenden Bildbereichs erfasst.

23. Verfahren zum Erfassen eines Objekts in einem Fahrzeug, insbesondere zur Insassenerkennung, bei dem
- eine Kamera (1) räumliche Informationen eines zu erfassenden Bildes erfasst und wenigstens eine optische Markierung (12,13,10,101,102,103,104) erfasst, die an wenigstens einem Element (3,5,6,7,8,20,21) angebracht ist, das in oder an dem Fahrzeug (100) angeordnet ist,
- eine der Kamera (1) nachgeschaltete Auswerteeinheit (110) die Position der wenigstens einen Markierung (12,13,10,101,102,103,104) ermittelt und daraus die Position des wenigstens einen Elements ermittelt, **dadurch gekennzeichnet daß** die Auswerteinheit (110) aus der Position der wenigstens einen-Markierung und der vorgegebenen Abmessung des Elements die Oberflächenform des Elements ermittelt.

24. Verfahren nach Anspruch 23, bei dem
- die Kamera (1) räumliche Informationen eines zu erfassenden Bildes erfasst,
- und die der Kamera (1) nachgeschaltete Auswerteeinheit (110) aus der räumliche Position der wenigstens einen Markierung (12,13,10,101,102,103,104) die Position des wenigstens einen Elements ermittelt.

25. Verfahren nach Anspruch 23 oder 24, **dadurch gekennzeichnet, dass**
- die Kamera (1) die Grauwerte des zu erfassenden Bildes erfasst,
- die Grauwerte der von der Kamera erfassten wenigstens einen Markierung sich von den Grauwerten der unmittelbaren Umgebung der wenigstens einen Markierung unterscheiden, wobei die Grauwerte der erfassten Markierung mindestens doppelt so hell sind wie die von der unmittelbaren Umgebung der Markierung.

26. Verfahren nach einem der vorherigen Verfahrensansprüche,
**dadurch gekennzeichnet, dass**
- das Licht einer Lichtquelle (11) im Fahrzeug und/oder des Umgebungslichts den zu erfassenden Bildbereich beleuchtet,
- die Markierung das Licht zur Kamera (1) reflektiert, und
- das reflektierte Licht im Vergleich zum von der Umgebung der Markierung reflektierten Lichts heller ist, vorzugsweise mindestens doppelt so hell.

27. Verfahren nach einem der vorherigen Verfahrensansprüche,
**dadurch gekennzeichnet, dass**
das Verfahren mit Hilfe der Vorrichtung gemäß einem der Ansprüche 1 bis 22 durchgeführt wird.

28. Verwendung der Vorrichtung und des Verfahrens nach einem der vorherigen Ansprüche zum Einstellen eines Elements,
**dadurch gekennzeichnet, dass**
- die Kamera (1) mindestens eine Markierung am inneren und/oder äußeren Rückspiegel des Fahrzeugs und/oder der Kopfstütze erfasst,
- die Auswerteinheit (110) die aktuelle Einstellposition des jeweiligen Rückspiegels ermittelt,
- die Auswerteinheit (110) die aktuelle Position des Kopfes des Insassen erkennt und den jeweiligen Rückspiegel bzw. die Kopfstütze passend zur Position des Kopfes einstellt.

29. Verwendung der Vorrichtung und des Verfahrens nach einem der vorherigen Ansprüche zum Schutz eines Gegenstands vor dem Einklemmen in einer verstellbaren Fensterscheibe (19), **dadurch gekennzeichnet, dass**
- mindestens eine Markierung (12) an einer verstellbaren Fensterscheibe (19) angeordnet ist und/oder eine Markierung (12) in die Fensterscheibe (19) integriert ist,
- aus der Position der mindestens einen Markierung die Position der Fensterscheibe, insbesondere der Oberkante der Fensterscheibe, ermittelt wird.

30. Verwendung nach Anspruch 29, **dadurch gekennzeichnet, dass** durch die Auswerteinheit (110) ein Gegenstand
- vorzugsweise der Kopf, der Hals, der Arm, die Hand und/oder die Finger eines Insassen -
in der Nähe des Gefahrenbereichs und/oder im Gefahrenbereich zwischen der Fensterscheibe (19) und dem die Fensterscheibe (19) einrahmenden Fensterrahmen erkannt wird, indem
- einige der Markierungen und/oder ein Teil der betreffenden Markierung von dem Gegenstand abgedeckt werden und dies von der Auswerteinheit (110) ausgewertet wird, und/oder
- das Objekt von dem Bildverarbeitungsalgorithmus in der Auswerteinheit (110) erkannt wird, wobei
der Schließvorgang der Fensterscheibe abhängig von der Position des Gegenstands und der Position der Oberkante der Fensterscheibe gesteuert wird, vorzugsweise verzögert wird.

## Claims

1. Device for sensing an object in a vehicle (100), in particular for occupant detection, having
- at least one optical marker (12, 13, 10, 101, 102, 103, 104) which is provided on at least one element (3, 5, 6, 7, 8, 20, 21) disposed on or in the vehicle (100),
- a camera (1) which is disposed in the vehicle (100) and detects the markers (12, 13, 10, 101, 102, 103, 104),
- an evaluation unit (110) which is connected downstream of the camera (1) and determines the position of the markers (12, 13, 10, 101, 102, 103, 104), **characterised in that**
- the evaluation unit (110) determines the surface shape of the element from the position of the at least one marker and the predefined dimension of the element (3, 5, 6, 7, 8, 20, 21).

2. Device according to one of the preceding claims,
**characterised in that**
the camera (1) acquires spatial information about the image area to be captured and is preferably implemented as a stereo camera with two image sensors (15) whose optical axes are spaced a predefined distance apart.

3. Device according to one of the preceding claims,
**characterised in that**
the evaluation unit (110) determines the position of an element (3, 5, 6, 7, 8) in the vehicle interior from the position of the markers (12, 13, 10, 101, 102, 103, 104).

4. Device according to one of the preceding claims,
**characterised in that**
the element (3, 5, 6, 7, 8, 20, 21) is moveable in relation to the vehicle (100).

5. Device according to one of the preceding claims,
**characterised in that**
the element (3, 5, 6, 7, 8, 20, 21) is fixed in relation to the vehicle (100).

6. Device according to one of the preceding claims,
**characterised in that**
the element (3, 5, 6, 7, 8) is implemented as a dashboard (8) and/or as a window (7) and/or as the lining of the vehicle roof (6) and/or as the vehicle floor (9) and/or as a vehicle seat (2) and/or as the backrest (3) of the vehicle seat (2) and/or as the seat base (5) of the vehicle seat (2) and/or as a child seat (20) and/or as a head restraint (4) and/or as an internal rear-view mirror (21) and/or as an external rear-view mirror and/or as a seatbelt and/or as a window glass (19).

7. Device according to one of the preceding claims,
**characterised in that**
the marker or markers (12, 13, 10, 101, 102, 103, 104) are disposed on a side of the relevant element, preferably on the side facing the camera (1).

8. Device according to one of the preceding claims,
**characterised in that**
the evaluation unit (110) determines the contour of the surface of the vehicle seat (2) from the position of the marker or markers (12, 13, 10, 101, 102, 103, 104) on the vehicle seat (2).

9. Device according to one of the preceding claims,
**characterised in that**
at least one of the markers (12, 13, 10, 101, 102, 103, 104) has a predefined geometrical shape.

10. Device according to one of the preceding claims,
**characterised in that**
at least one of the markers (12, 13, 10, 101, 102, 103, 104) is implemented punctually (13) and/or lineally (101) and/or areally.

11. Device according to one of the preceding claims,
**characterised in that**
at least one of the markers (12, 13, 10, 101, 102, 103, 104) exhibits a characteristic shape, preferably as a group of punctual (104) and/or lineal (101, 102) and/or areal (105) markers.

12. Device according to one of the preceding claims,
**characterised in that**
at least one of the markers (12, 13, 10, 101, 102, 103, 104) is implemented as a reflector (10), for example as a flat mirror, triple mirror or spherical mirror.

13. Device according to one of the preceding claims,
**characterised in that**
at least one of the markers (12, 13, 10, 101, 102, 103, 104) is implemented as an opto-transmitter (13), preferably as an electroluminescence foil, LED, gas discharge lamp or laser diode.

14. Device according to claim 13, **characterised in that** an opto-transmitter (13) is encoded by emission of a predefined signal sequence.

15. Device according to claim 14, **characterised in that** the signal sequence of the opto-transmitter (13) consists of digital signals (On, Off) which are synchronised with the image capture rate (image i, image (i+1)) of the camera (1).

16. Device according to one of the preceding claims,
**characterised in that**
the camera (1) is disposed on the lining of the vehicle roof (6), preferably centrally between the vehicle seats.

17. Device according to one of the preceding claims,
**characterised in that**
a light source (11) illuminates the image area to be captured by the camera (1).

18. Device according to one of the preceding claims,
**characterised in that**
the light source (11) is integrated in the camera (1).

19. Device according to one of the preceding claims,
**characterised in that**
- markers (12, 13, 10, 101, 102, 103, 104) are disposed on the seat base (5) and on the surface of the seat back (3),
- the markers are detected by the camera (1) and
- the evaluation unit (110) determines the occupancy state of the vehicle seat (2) as a function of the covering of the markers (12, 13, 10, 101, 102, 103, 104).

20. Device according to claim 19, **characterised in that** the evaluation unit (110) recognises the occupancy of the vehicle seat with a child seat and its position on the vehicle seat as a function of the detected markers on the child seat.

21. Device according to one of the preceding claims,
**characterised in that**
the evaluation unit (110) determines the spatial position of the elements (3, 5, 6, 7, 8, 20, 21).

22. Device according to one of the preceding claims,
**characterised in that**
the camera (1) acquires grey-scale values of the image area to be captured.

23. Method for sensing an object in a vehicle, particularly for occupant detection, wherein
- a camera (1) records spatial information of an image to be captured and detects at least one optical marker (12, 13, 10, 101, 102, 103, 104) which is provided on at least one element (3, 5, 6, 7, 8, 20, 21) which is disposed in or on the vehicle (100),
- an evaluation unit (110) connected downstream of the camera (1) determines the position of the at least one marker (12, 13, 10, 101, 102, 103, 104) and from it determines the position of the at least one element, **characterised in that**
- the evaluation unit (110) determines the surface shape of the element from the position of the at least one marker and the predefined dimension of the element.

24. Method according to claim 23, wherein
- the camera (1) records spatial information of an image to be captured,
- and the evaluation unit (110) connected downstream of the camera (1) determines the position of the at least one element from the spatial position of the at least one marker (12, 13, 10, 101, 102, 103, 104) .

25. Method according to claim 23 or 24, **characterised in that**
- the camera (1) acquires the grey-scale values of the image to be captured,
- the grey-scale values of the at least one marker detected by the camera are different from the grey-scale values in the immediate vicinity of said at least one marker, the grey-scale values of the detected marker being at least twice as bright as those in the immediate vicinity of the marker.

26. Method according to one of the preceding method claims,
**characterised in that**
- the light from a light source (11) in the vehicle and/or of the ambient lighting illuminates the image area to be captured,
- the marker reflects the light to the camera (1), and
- the reflected light is brighter than the light reflected from the area around the marker, preferably at least twice as bright.

27. Method according to one of the preceding method claims, **characterised in that**
the method is implemented using the device as claimed in one of claims 1 to 22.

28. Use of the device and of the method as claimed in one of the preceding claims for adjusting an element,
**characterised in that**
- the camera (1) detects at least one marker on the interior and/or exterior rear-view mirror of the vehicle and/or on the head restraint,
- the evaluation unit (110) determines the current adjustment position of the relevant rear-view mirror,
- the evaluation unit (110) detects the current position of the occupant's head and adjusts the relevant rear-view mirror or the head restraint according to the position of the head.

29. Use of the device and of the method as claimed in one of the preceding claims for protecting an object from becoming trapped in an adjustable window glass (19),
**characterised in that**
- at least one marker (12) is disposed on an adjustable window glass (19) and/or a marker (12) is integrated in the window glass (19),
- the position of the window glass, in particular the top edge of the window glass, is determined from the position of the at least one marker.

30. Use according to claim 29, **characterised in that** an object
- preferably an occupant's head, neck, arm, hand and/or fingers -
in the vicinity of the hazard area and/or in the hazard area between the window glass (19) and the window frame enclosing the window glass (19) is detected by the evaluation unit (110) by
- some of the markers and/or part of the marker in question being covered by the object and this being analysed by the evaluation unit (110), and/or
- the object being recognised by the image processing algorithm in the evaluation unit (110), with
the closing operation of the window glass being controlled, preferably delayed, as a function of the position of the object and the position of the top edge of the window glass.

## Revendications

1. Dispositif pour détecter un objet dans un véhicule (100), en particulier pour la reconnaissance d'un occupant, comprenant :
- au moins un marquage optique (12, 13, 10, 101, 102, 103, 104), qui est disposé sur au moins un élément (3, 5, 6, 7, 8, 20, 21) disposé sur ou dans le véhicule (100),
- une caméra (1) qui détecte les marquages (12, 13, 10, 101, 102, 103, 104), qui est disposée dans le véhicule (100),
- une unité d'analyse (110) qui détermine la position des marquages (12, 13, 10, 101, 102, 103, 104), et qui est placée en aval de la caméra (1),
**caractérisé en ce que**
l'unité d'analyse (110) détermine la forme de surface de l'élément à partir de la position d'au moins un marquage et de la dimension prédéterminée de l'élément (3, 5, 6, 7, 8, 20, 21).

2. Dispositif selon une des revendications précédentes, **caractérisé en ce que** la caméra (1) capte des informations d'espace de la zone image à détecter et est de préférence constituée par une caméra stéréo munie de deux capteurs d'image (15) dont les axes optiques présentent un écartement mutuel prédéterminé.

3. Dispositif selon une des revendications précédentes, **caractérisé en ce que** l'unité d'analyse (110) détermine la position d'un élément (3, 5, 6, 7, 8) à l'intérieur du véhicule automobile à partir de la position des marquages (12, 13, 10, 101, 102, 103, 104).

4. Dispositif selon une des revendications précédentes, **caractérisé en ce que** l'élément (3, 5, 6, 7, 8, 20, 21) est mobile par rapport au véhicule (100).

5. Dispositif selon une des revendications précédentes, **caractérisé en ce que** l'élément (3, 5, 6, 7, 8, 20, 21) est fixe par rapport au véhicule (100).

6. Dispositif selon une des revendications précédentes, **caractérisé en ce que** l'élément (3, 5, 6, 7, 8, 20, 21) est constitué par le tableau de bord (8) et/ou une fenêtre (7) et/ou le plafond du pavillon (6) du véhicule et/ou par le plancher (9) du véhicule et/ou par le siège de véhicule (2) et/ou par le dossier (3) du siège de véhicule (2) et/ou par la surface d'assise (5) du siège de véhicule (2) et/ou par un siège d'enfant (20) et/ou par un appuie-tête (4) et/ou par un rétroviseur intérieur (21) et/ou par un rétroviseur extérieur et/ou par une ceinture et/ou par une vitre (19).

7. Dispositif selon une des revendications précédentes, **caractérisé en ce que** le marquage ou les marquages (12, 13, 10,101, 102, 103, 104) sont disposés sur un côté de l'élément concerné, de préférence sur le côté dirigé vers la caméra (1).

8. Dispositif selon une des revendications précédentes, **caractérisé en ce que** l'unité d'analyse (110) détermine le contour de la surface du siège de véhicule (2) à partir de la position du marquage ou des marquages (12, 13, 10, 101, 102, 103, 104) sur le siège de véhicule (2).

9. Dispositif selon une des revendications précédentes, **caractérisé en ce qu'**au moins un des marquages (12, 13, 10, 101, 102, 103, 104) présente une forme géométrique prédéterminée.

10. Dispositif selon une des revendications précédentes, **caractérisé en ce qu'**au moins un des marquages (12, 13, 10, 101, 102, 103, 104) est ponctuel (13) et/ou linéaire (101) et/ou de surface étendue.

11. Dispositif selon une des revendications précédentes, **caractérisé en ce qu'**au moins un des marquages (12, 13, 10, 101, 102, 103, 104) présente une figure caractéristique, de préférence un groupe de marquages ponctuels (104) et/ou linéaires (101,102) et/ou de surface étendue (105).

12. Dispositif selon une des revendications précédentes, **caractérisé en ce qu'**au moins un des marquages (12, 13, 10, 101, 102, 103, 104) est constitué par un réflecteur (10) qui est constitué par exemple, par un miroir plan, un miroir trièdre ou un miroir sphérique.

13. Dispositif selon une des revendications précédentes, **caractérisé en ce qu'**aumoins un des marquages (12, 13, 10, 101, 102, 103, 104) est constitué par un émetteur de lumière (13), de préférence par une feuille électroluminescente, une DEL, une lampe à décharge dans un gaz ou une diode laser.

14. Dispositif selon la revendication 13, **caractérisé en ce qu'**un émetteur de lumière (13) est codé par l'émission d'une séquence de signaux prédéterminée.

15. Dispositif selon la revendication 14, **caractérisé en ce que** la séquence de signaux de l'émetteur de lumière (13) est constituée par des signaux numériques (allumé, éteint) qui sont synchronisés avec la cadence de capture d'image (image i, image i + 1) de la caméra (1).

16. Dispositif selon une des revendications précédentes, **caractérisé en ce que** la caméra (1) est disposée au plafond du pavillon (6) du véhicule automobile de préférence en position centrée entre les sièges du véhicule.

17. Dispositif selon une des revendications précédentes, **caractérisé en ce qu'**une source lumineuse (11) éclaire la zone image qui doit être détectée par la caméra (1).

18. Dispositif selon une des revendications précédentes, **caractérisé en ce que** qu'une source lumineuse (11) est intégrée dans la caméra (1).

19. Dispositif selon une des revendications précédentes, **caractérisé en ce que**
- les marquages (12, 13, 10, 101, 102, 103, 104) sont disposés sur la surface d'assise (5) et sur la surface du dossier (3),
- les marquages sont détectés par la caméra (1) et
- l'unité d'analyse (110) détermine l'état d'occupation du siège de véhicule (2) en fonction de l'occultation des marquages (12, 13, 10, 101, 102, 103, 104).

20. Dispositif selon la revendication 19, **caractérisé en ce que** l'unité d'analyse (110) reconnaît l'occupation du siège de véhicule par un siège d'enfant, et la position de ce dernier sur le siège de véhicule en fonction des marquages reconnus sur le siège d'enfant.

21. Dispositif selon une des revendications précédentes, **caractérisé en ce que** l'unité d'analyse (110) détermine la position dans l'espace des éléments (3, 5, 6, 7,8,20,21).

22. Dispositif selon une des revendications précédentes, **caractérisé en ce que** la caméra (1) capte les niveaux de gris de la zone image à détecter.

23. Procédé pour détecter un objet dans un véhicule, en particulier pour la reconnaissance d'un occupant, dans lequel
- une caméra (1) capture des informations dans l'espace d'une image à détecter et détecte au moins un marquage optique (12, 13, 10, 101, 102, 103, 104) qui est disposé sur au moins un élément (3, 5, 6, 7, 8, 20, 21) qui est lui-même disposé dans ou sur le véhicule (100),
- une unité d'analyse (110) connectée en aval de la caméra (1) détermine la position d'au moins un marquage (12, 13, 10, 101, 102, 103, 104) et, sur cette base, la position de l'au moins un élément,
**caractérisé en ce que** l'unité d'analyse (110) détermine la forme de la surface de l'élément à partir de la position de l'au moins un marquage et de la dimension prédéterminée de l'élément.

24. Procédé selon la revendication 23, dans lequel
- la caméra (1) capte des informations dans l'espace d'une image à détecter,
- et l'unité d'analyse (110) connectée en aval de la caméra (1) détermine la position d'au moins un élément à partir de la position dans l'espace de l'au moins un marquage (12, 13,10, 101, 102, 103, 104).

25. Procédé selon la revendication 23 ou 24, **caractérisé en ce que**
- la caméra (1) capte les niveaux de gris de l'image à détecter,
- les niveaux de gris de l'au moins un marquage détecté par la caméra sont différents des niveaux de gris de l'environnement immédiat de l'au moins un marquage, les niveaux de gris du marquage détecté étant au moins deux fois plus lumineux que ceux de l'environnement immédiat du marquage.

26. Procédé selon une des revendications de procédé précédentes, **caractérisé en ce que**
- la lumière d'une source lumineuse (11) placée dans le véhicule et/ou la lumière ambiante éclairent la zone image à détecter,
- le marquage réfléchit la lumière vers la caméra (1) et
- la lumière réfléchie est plus lumineuse, de préférence au moins deux fois plus lumineuse, par comparaison avec la lumière réfléchie par l'environnement du marquage.

27. Procédé selon une des revendications de procédé précédentes, **caractérisé en ce que** le procédé est mis en oeuvre à l'aide du dispositif selon une des revendications 1 à 22.

28. Utilisation du dispositif et du procédé selon une des revendications précédentes pour régler un élément, **caractérisée en ce que**
- la caméra (1) détecte au moins un marquage sur le rétroviseur intérieur et/ou extérieur du véhicule et/ou de l'appuie-tête,
- l'unité d'analyse (110) reconnaît la position de réglage actuelle du rétroviseur concerné,
- l'unité d'analyse (110) reconnaît la position actuelle de la tête de l'occupant et règle le rétroviseur ou l'appuie-tête pour l'adapter à la position de la tête.

29. Utilisation du dispositif et du procédé selon une des revendications précédentes pour la protection d'un objet avant qu'il soit coincé dans une vitre réglable, (19), **caractérisé en ce que**
- au moins un marquage (12) est disposé sur une vitre réglable (19) et/ou un marquage (12) est intégré dans la vitre (19),
- la position de la vitre, en particulier la position du bord supérieur de la vitre, est déterminée à partir de la position d'au moins un marquage.

30. Emploi selon la revendication 29, **caractérisée en ce que** l'unité d'analyse (110) détecte un objet - de préférence la tête, le cou, le bras, la main et/ou les doigts d'un occupant - à proximité de la région dangereuse et/ou dans la région dangereuse entre la vitre (19) et l'encadrement de vitre qui encadre la vitre (19), par le fait que
- certains des marquages et/ou une partie du marquage concerné sont occultés par l'objet et ceci est analysé par l'unité d'analyse (110) et/ou
- l'objet est reconnu par l'algorithme de traitement d'image dans l'unité d'analyse (110),
le processus de fermeture de la vitre étant commandé, de préférence décéléré, en fonction de la position de l'objet et de la position du bord supérieur de la vitre.
